# EUROPÄISCHE PATENTANMELDUNG

(11) **EP 1 286 027 A1**
(43) Veröffentlichungstag der Anmeldung: **26.02.2003**
(21) Anmeldenummer: 01119562.5
(22) Anmeldetag: 14.08.2001
(51) Int. Cl.: F01N 3/20, B01D 53/86, B01D 53/94

(54) **Katalysatorsystem, Verwendung eines Katalysatorsystems und Verfahren zum Betrieb eines Katalysatorsystems**

(71) Anmelder: SIEMENS AKTIENGESELLSCHAFT, 80333 München (DE)
(72) Erfinder: Fischer, Stefan, Dr., 71154 Nufringen (DE); Pajonk, Günther, Dr., 96199 Zapfendorf (DE); Rigby, Karina, Dr., 96050 Bamberg (DE)

(57) **Zusammenfassung**

Katalysatorsystem (1,21,41,61), Verwendung desselben und Verfahren zum Betrieb eines Katalysatorsystems (1,21,41,61). Zum Abbau von Stickoxiden mit Hilfe eines Reaktionsmittels (11,55,57,69) in einem Abgas wird ein Katalysatorsystem (1,21,41,61) mit einem von dem Abgas durchströmbaren Reaktionsbereich (3,27,53), mit einer Katalysatoranordnung (5) und einer der Katalysatoranordnung (5) zugeordneten Zugabevorrichtung (7), über die das Reaktionsmittel (11,55,57,69) in den Reaktionsbereich (3,27,53)einbringbar ist, gemäß der Erfindung derart ausgebildet, dass das Reaktionsmittel (11,55,57,69) nicht in einem einzigen, sondern in zwei oder mehreren Schritten zugebbar ist. Denn die Zugabe in einem hohen Überschuss begünstigt zusätzlich die Oxidation des Reaktionsmittels (11,55,57,69), so dass das Reaktionsmittel(11,55,57,69) günstigerweise zugebbar sein sollte. Insbesondere bei hohen Abgastemperaturen, z.B. oberhalb von 450 °C, und/oder kleinen Stickoxideingangskonzentration, z.B. unterhalb von 200 ppm, ist dies von Bedeutung.

## Beschreibung

Die Erfindung bezieht sich auf ein Katalysatorsystem zum Abbau von Stickoxiden in einem Abgas mit Hilfe eines Reaktionsmittels, mit einem von dem Abgas durchströmbaren Reaktionsbereich, mit einer Katalysatoranordnung und einer der Katalysatoranordnung zugeordneten Zugabevorrichtung, über die Reaktionsmittel in den Reaktionsbereich einbringbar ist. Die Erfindung betrifft weiter die Verwendung des Katalysatorsystems. Weiter betrifft die Erfindung ein Verfahren zum Abbau von Stickoxiden in einem Abgas mit Hilfe eines Reaktionsmittels, mit einem Katalysatorsystem mit einem von dem Abgas durchströmbaren Reaktionsbereich und einer Katalysatoranordnung und einer der Katalysatoranordnung zugeordneten Zugabevorrichtung.

Bei der Verbrennung eines fossilen Brennstoffs oder von Müll in einer Verbrennungsanlage entstehen in nicht unerheblichem Umfang Schadstoffe wie Stickoxide, Kohlenwasserstoffe, Kohlenmonoxid, Schwefeloxide und insbesondere Dioxine und Furane, welche über das Abgas der Verbrennungsanlage in die Umwelt gelangen könnten. Die genannte Verbrennungsanlage kann beispielsweise eine Kesselanlage, ein mit Kohle, Öl oder Gas befeuertes Kraftwerk, eine Gasturbine oder ein Verbrennungsmotor, insbesondere ein Dieselmotor, oder eine Müllverbrennungsanlage sein.

Aufgrund strenger gesetzlicher Vorschriften, welche die Abgabemenge beispielsweise der obengenannten Schadstoffe limitieren, ist für die genannten Verbrennungsanlagen eine zusätzliche Behandlung der Abgase zur Verminderung der darin enthaltenen Schadstoffe erforderlich. Hierzu sind in der Vergangenheit eine Vielzahl von Katalysatoren entwickelt worden, welche die genannten Schadstoffe zu ungefährlichen Verbindungen umsetzen.

So sind beispielsweise Katalysatoren mit einer edelmetallhaltigen Aktivmasse bekannt, an denen Kohlenwasserstoffe und Kohlenmonoxid mit Stickoxiden zur Kohlendioxid, Stickstoff und/oder Wasser umgewandelt werden, insbesondere zur Verringerung der Schadstoffe im Abgas eines Automotors. Des Weiteren sind Katalysatoren, umfassend ein katalytisch aktives Material auf der Basis von Titandioxid, zum Abbau von Dioxinen und/oder Furanen bekannt. An solchen Katalysatoren können Dioxine und/oder Furane mit in einem Abgas vorhandenem Restsauerstoff zu unschädlichen Verbindungen oxidiert werden.

Insbesondere zur Reduktion von Stickoxiden eignet sich aber beispielsweise ein Katalysator, wie er in der DE 198 06 062 C1 und in der DE 198 24 206 C1 beschrieben ist. Auch sind dort eine Reihe vorteilhafter Ausführungen einer katalytischen Aktivmasse eines Katalysators angegeben.

Hinsichtlich einer Abgaszusammensetzung ist es verschiedentlich notwendig, dem Abgas ein Reaktionsmittel beizugeben, welches dann an einem geeigneten Katalysator mit dem zu beseitigenden Schadstoff zu unschädlichen Verbindungen reagiert. Dies ist beispielsweise auch bei den oben genannten Katalysatoren zum Abbau von Stickoxiden in sauerstoffhaltigen Abgasen der Fall. Dazu wird als ein Reaktionsmittel ein geeignetes Reduktionsmittel dem Abgas beigegeben, welches auch in Anwesenheit von Sauerstoff die im Abgas vorhandenen Stickoxide zu unschädlichem Stickstoff reduziert. Besonders vorteilhaft lässt sich diese Reaktion mit einem sogenannten DeNOx-Katalysator auf Basis von Titandioxid mit Beimengungen an Vanadiumpentoxid, Molybdäntrioxid und/oder Wolframtrioxid katalysieren. Ein solcher Katalysator setzt gemäß dem SCR-Verfahren (Selektive Katalytische Reduktion) Stickoxide mit einem geeigneten Reduktionsmittel zu Stickstoff und Wasser um. Ein solches Reaktionsmittel kann beispielsweise Ammoniak und/oder Harnstoff umfassen.

Um einen möglichst vollständigen Abbau des Schadstoffs im Abgas zu erzielen, ist es vorteilhaft, das zugegebene Reaktionsmittel in einer bezüglich der Konzentration des Schadstoffs stöchiometrischen Menge hinzuzugeben. Allerdings unterliegt in der Regel die Konzentration eines Schadstoffs im Abgas einer Verbrennungsanlage zeitlichen Schwankungen. Außerdem bestimmen gewisse Reaktionsparameter, wie z.B. Temperatur oder Druck, die Umsetzung des Schadstoffes mit dem Reaktionsmittel. So kann es beispielsweise zu einer zeitweisen Überdosierung des Reaktionsmittels kommen, was eine Emission des Reaktionsmittels zusammen mit dem Abgas in die Umwelt zufolge hätte. Eine derartige Emission von Reaktionsmittel wird auch als Reaktionsmittel-Schlupf bezeichnet und sollte möglichst vermieden werden. Das Reaktionsmittel selbst könnte beispielsweise schädlich sein. Darüber hinaus kann ein Reaktionsmittel-Schlupf in der Regel auch eine unwirtschaftliche Arbeitsweise des Katalysators bedeuten. Außerdem kann hierbei Reaktionsmittel im Abgas ungenutzt verbleiben. Andererseits sollte jedoch auch eine zu geringe Zugabe des Reaktionsmittels vermieden werden, da dies eine nur unzureichende Schadstoffreduktion im Abgas zufolge hätte.

Im Hinblick auf diese Problematik wurden bereits unterschiedlich aufwendige Verfahren zur Regelung einer Reduktionsmittelzugabe vorgeschlagen, wie sie beispielsweise der DE 197 56 251 C1 oder der DE 199 01 915 C1 oder der DE 197 50 38 C1 zu entnehmen sind. Bei den genannten Verfahren werden eine Reihe von betriebsrelevanten Parameter des Katalysators und/oder des Abgases genutzt, um zumindest theoretisch eine nahezu optimale Eingabemenge eines Reaktionsmittels vornehmen zu können. Ein weitgehend vereinfachtes Verfahren ist beispielsweise der DE 198 14 386 zu entnehmen. Solche Verfahren können aber beispielsweise auch im Hinblick auf eine besonders ausgestaltete Aktivmasse eines Katalysators ausgelegt sein, wie sie beispielsweise in der DE 198 54 502 C1 beschrieben ist, so dass ein Katalysator auch bei extrem hohen Temperaturen, beispielsweise oberhalb von 450 °C, effektiv arbeiten kann.

Aus unterschiedlichsten Gründen eignen sich zum Teil auch Kombinationen und/oder Reihenschaltungen von Katalysatoren, die aber verschiedenartig sind und unterschiedliche Aufgaben haben. So ist beispielsweise aus der DE 199 29 935 C1 ein als Reduktionsmittelgenerator dienender Zusatzkatalysator bekannt. Die Kombination eines Oxidationskatalysators mit einem Reduktionskatalysator ist beispielsweise aus der DE 100 09 427 C1 und die Kombination eines Oxidationskatalysators mit einem Dioxinkatalysator aus der DE 196 03 635 C1 bekannt. Solche Katalysatorsysteme umfassen Katalysatoren von jeweils unterschiedlichem Typus und/oder es werden unterschiedliche Reaktionen gegebenenfalls zum Abbau mehrerer und/oder unterschiedlicher Substanzen katalysiert.

Aufgabe der Erfindung ist es, ein Katalysatorsystem anzugeben, welches, insbesondere im Hinblick auf den effizienten Einsatz des Reaktionsmittels verbessert ist. Eine weitere Aufgabe der Erfindung besteht in der Angabe eines Verfahrens zum Abbau von Stickoxiden in einem Abgas mit Hilfe eines Reaktionsmittels mit einem Katalysatorsystem, welches Verfahren hinsichtlich der Effizienz verbessert ist.

Zur Lösung der Aufgabe, betreffend die Vorrichtung, wird von einem Katalysatorsystem der eingangs genannten Art zum Abbau von Stickoxiden in einem Abgas mit Hilfe eines Reaktionsmittels ausgegangen. Bei einem solchen Katalysatorsystem ist erfindungsgemäß vorgesehen, dass ein erster Teil der Katalysatoranordnung einem ersten Teil einer Zugabevorrichtung und ein zweiter Teil der Katalysatoranordnung einem zweiten Teil einer Zugabevorrichtung zugeordnet ist, wobei der erste Teil und der zweite Teil der Katalysatoranordnung gleiche Katalysatoren umfassen.

Die Erfindung geht dabei von der Erkenntnis aus, dass grundsätzlich ein übermäßiges Angebot, d.h. ein Überschuss, an Reaktionsmittel an einer Katalysatoranordnung nachteilig ist. Ein übermäßiges Angebot, wie es bei den konventionellen Katalysatoranordnungen zu finden ist, ist zum einen eine wesentliche Ursache für den Reaktionsmittel-Schlupf. Zum anderen erfolgt ein erhöhter Verbrauch an Reaktionsmittel bei dessen übermäßigem Angebot zusätzlich dadurch, dass Reaktionsmittel am Katalysator verbrannt wird. Dies wird noch dadurch verstärkt, dass ein zunehmendes Reaktionsmittel-Angebot die Verbrennung überproportional erhöht.

Dies ist beispielsweise dann der Fall, wenn zur Bewirkung einer bestimmten katalytischen Reaktion im Wesentlichen nur eine einzige Katalysatoranordnung vorgesehen ist und/oder nur eine einzige Zugabevorrichtung für ein Reaktionsmittel. Dies führt nämlich in der Regel zu einem, wenigstens in einem Teilbereich des Reaktionsbereichs eines Katalysators, übermäßigen Angebot von Reaktionsmittel, d.h. zu einer überstöchiometrischen Konzentration, und damit, wie oben beschrieben, zu dem genannten ungünstigen Reaktionsmittel-Schlupf und/oder übermäßigen Verbrennung von Reaktionsmittel am Katalysator wenigstens in dem Teilbereich.

Dagegen erlaubt ein Katalysatorsystem nach der Erfindung eine wesentlich gleichmäßigere und insbesondere räumlich gezielte Zugabe von Reaktionsmittel und/oder auch von verschiedenen Reaktionsmitteln. Denn das Katalysatorsystem weist eine Katalysatoranordnung mit einem ersten Teil und einem zweiten Teil auf. Dem ersten Teil der Katalysatoranordnung ist dabei ein erster Teil einer Zugabevorrichtung zugeordnet, über die Reaktionsmittel zu Bewirkung der katalytischen Reaktion an dem ersten Teil der Katalysatoranordnung zugebbar ist. Des Weiteren ist dem zweiten Teil der Katalysatoranordnung ein zweiter Teil einer Zugabevorrichtung zugeordnet, über die das für die katalytische Reaktion an dem zweiten Teil der Katalysatoranordnung notwendige Reaktionsmittel zugebbar ist. Der erste Teil und der zweite Teil umfassen dabei gleiche Katalysatoren, katalysieren also die gleiche chemische Reaktion. Das Katalysatorsystem weist gegebenenfalls weitere Teile von Katalysatoranordnungen und/oder weitere diesen zugeordneten Teile von Zugabevorrichtungen auf, wodurch je nach Bedarf eine zumindest in den insbesondere für den Reduktionsprozess relevantesten Teilbereichen und/oder Reaktionsbereichen des Katalysatorsystems räumlich möglichst gleichmäßige und/oder aufgeteilte Zugabe von Reaktionsmittel, gegebenenfalls auch verschiedenen Reaktionsmitteln oder Reaktionsmitteln unterschiedlicher Zusammensetzung und/oder Dosierung, erreicht wird.

Das angegebene Katalysatorsystem weist auf einfache Weise bewirkte Vorteile auf, die selbst bei aufwendig geregelten Katalysatoren nicht ohne weiteres zu erreichen sind, insbesondere nicht in Betriebsparameterbereichen, welche im Grenzbereich der den Normalbetrieb kennzeichnenden Betriebsparameter liegen. Das Katalysatorsystem hat jedoch den Vorteil, dass vor allem bei im Grenzbereich des Normalbetriebs eines Katalysators liegenden, betriebsrelevanten Parameterbereichen, z.B. hohen Abgastemperaturen oder auch z.B. kleinen NOx-Eingangskonzentrationen, Stickoxide verlässlich abgebaut werden ohne einen übermäßigen Verbrauch an Reaktionsmittel, insbesondere durch übermäßige Verbrennung, hinnehmen zu müssen. Insbesondere wird selbst bei hohen Temperaturen von beispielsweise über 450 °C und/oder kleinen Eingangskonzentrationen von Stickoxiden (z.B. unterhalb von 300 ppm, insbesondere unterhalb von 200 ppm) ein ausreichend hoher Abbau von Stickoxiden erreicht.

Bei Katalysatoranordnungen und/oder Katalysatorsystemen gemäß dem Stand der Technik sind vergleichbare Ergebnisse nur mit einer zum Teil weit über die Stöchiometrie hinausgehenden Reaktionsmittelzugabe erreichbar. Dagegen ist ein Katalysatorsystem dafür geeignet in der Regel sehr präzise mit stöchiometrischem Verbrauch und erforderlichenfalls auch mit unterstöchiometrischem Verbrauch an Reduktionsmittel zu arbeiten. Selbst bei im oben genannten Grenzbereich liegenden Betriebsparameterbereichen ist mit einer nur geringen überstöchiometrischen Zugabe, insbesondere unterhalb des Faktors 1.3, von Reduktionsmitteln ein ausreichender Abbau von Stickoxiden erreichbar. Damit wird vorteilhafterweise eine unnötige Verbrennung von Reaktionsmittel und/oder Reaktionsmittel-Schlupf sicher vermieden. Schließlich ist das Katalysatorsystem kostengünstiger betreibbar als eines gemäß dem Stand der Technik. Dies betrifft sowohl den Verbrauch an kostspieligem Reaktionsmittel als auch der sonstigen Auslegung eines Katalysatorsystems und/oder einer Katalysatoranordnung und/oder einer Regelung derselben.

Vorteilhafte Weiterbildungen der Erfindung sind den Unteransprüchen 2 bis 6 zu entnehmen.

So sind vorteilhaft der erste und der zweite Teil der Katalysatoranordnung jeweils als ein DeNOx-Katalysator ausgebildet. Ein solcher Katalysator baut Stickoxide mittels eines Reduktionsmittels gemäß dem SCR-Verfahren ab. Dabei ist durchaus gegebenenfalls auch ein weiterer, von dem ersten und dem zweiten Teil der Katalysatoranordnung verschiedener Teil vorgesehen, der eine andere Reaktion katalytisch unterstützt. Gemäß der Erfindung wird eine Zugabe von Reaktionsmittel für eine katalytische Reaktion räumlich vergleichmäßigt, jedenfalls aber aufgeteilt. Dazu ist vorteilhaft auch eine Vielzahl von Teilen einer Zugabevorrichtung vorgesehen.

Vorteilhafterweise ist in Strömungsrichtung des Abgases der erste Teil der Katalysatoranordnung vor dem zweiten Teil der Katalysatoranordnung angeordnet und mindestens ein erster Teil einer Zugabevorrichtung vor dem ersten Teil der Katalysatoranordnung angeordnet. Besonders günstig ist dabei eine abwechselnde Abfolge, jeweils eines Teils einer Zugabevorrichtung und eines Teils einer Katalysatoranordnung. Diese Abfolge muss aber nicht für das gesamte Katalysatorsystem durchgängig erfolgen.

Günstigerweise weist die Katalysatoranordnung wenigstens eine eine selektive katalytische Reaktion unterstützende Substanz zum Abbau von Stickoxiden mit Hilfe eines Reaktionsmittels in einem Abgas auf. Insbesondere ist eine katalytische Substanz aus der Gruppe Titanoxid, Wolframoxid, Molybdänoxid, Vanadiumoxid, Calciumoxid, Aluminiumoxid, Boroxid und Siliziumoxid vorteilhaft. Vor allem sind Katalysatoren gemäß der oben genannten DE 198 06 062 C1 und DE 198 24 206 C1 und die dort genannten Aktivmassen vorteilhaft.

Vorteilhafterweise ist ein Reaktionsmittel zugebbar, welches im Wesentlichen zu einem Reduktionsmittel für Stickoxide umsetzbar ist. Vorteilhaft ist beispielsweise Harnstoff zugebbar. Als Reaktionsmittel eignen sich aber auch alle anderen Substanzen, welche beispielsweise zu einer Ammoniakverbindung umsetzbar sind.

Erfindungsgemäß ist die Verwendung eines Katalysatorsystems in einer der oben genannten Ausführungen bei einer Verbrennungsanlage, insbesondere einer Gasturbine, insbesondere in deren Abgasstrom, vorgesehen.

Die obige Aufgabe wird hinsichtlich des Verfahrens erfindungsgemäß gelöst durch ein Verfahren der eingangs genannten Art, wobei
- das Abgas in Strömungsrichtung in den Reaktionsbereich einströmt,
- dem Abgas vor einem ersten Teil der Katalysatoranordnung Reaktionsmittel zugegeben wird, und
- wenigstens ein Teil der Stickoxide über eine katalytische Reaktion an dem ersten Teil der Katalysatoranordnung abgebaut wird, und
- dem Abgas vor einem zweiten Teil der Katalysatoranordnung Reaktionsmittel zugegeben wird, und
- ein weiterer Teil der Stickoxide über eine katalytische Reaktion an dem zweiten Teil der Katalysatoranordnung abgebaut wird, und
- das Abgas aus dem Reaktionsbereich ausströmt.

Das Verfahren wird vorteilhafterweise mit einem Katalysatorsystem gemäß der Erfindung ausgeführt. Die Zugabe, z.B. in Form einer Eindüsung von Reaktionsmittel in den Abgasstrom kann dabei in Strömungsrichtung des Abgases oder entgegen der Strömungsrichtung des Abgases oder auch quer, insbesondere senkrecht, zu der Strömungsrichtung des Abgases erfolgen.

Vorteilhafte Weiterbildungen des Verfahrens gemäß der Erfindung sind den Unteransprüchen 8 bis 14 zu entnehmen.

Günstigerweise wird in Strömungsrichtung abwechselnd zunächst Reaktionsmittel zugegeben und danach ein Teil der Stickoxide an einem Teil der Katalysatoranordnung abgebaut. Von dieser abwechselnden Reihenfolge kann aber durchaus abgewichen werden.

Vorteilhafterweise erfolgt wenigstens an einer der Zugabevorrichtung eine gemäß dem Betriebszustand des Katalysatorsystems abgestimmte, kontrollierte oder geregelte Eingabe des Reaktionsmittels. Dies umfasst die Möglichkeit beispielsweise das Katalysatorsystem selbst abzustimmen, beispielsweise über eine Katalysatortemperatur und/oder eine Eingabemenge und/oder eine Eingabestelle und/oder eine Eingabeverteilung eines Reaktionsmittels.

Vorteilhafterweise ist eine solche Eingabe des Reaktionsmittels gemäß dem Betriebszustand des Katalysatorsystems und/oder des Abgases und/oder einer dem Abgas zugeordneten Verbrennungsmaschine abgestimmt, kontrolliert oder geregelt.

Unter anderem erweist sich eine Abstimmung, Kontrolle oder Regelung gemäß einem Betriebsparameter des Abgases, wie Temperatur oder Stickoxidkonzentration und/oder einer Kombination solcher oder weiterer Betriebsparameter, als günstig.

Günstigerweise umfasst die Abstimmung, z.B. der Reaktionsmittelkonzentration, Kontrolle oder Regelung eine Kalkulation der Eingabemenge des Reaktionsmittels. Als Reaktionsmittel kommt hierbei beispielsweise Ammoniak in Frage.

Vorteilhafterweise wird an einem oder mehreren Teilen der Zugabevorrichtung Reaktionsmittel unterstöchiometrisch zugegeben.

Als besonders günstig durchführbar erweist sich das Verfahren gemäß der Erfindung bei Abgastemperaturen oberhalb von 400 °C und/oder bei Abgaseingangskonzentration unterhalb von 300 ppm oder sogar unterhalb von 200 ppm.

Gemäß der Erfindung wird also besonders vorteilhaft von einem Verfahren zum Abbau von Stickoxiden in einem Abgas mit Hilfe eines Reaktionsmittels, bei dem das Abgas in einen Reaktionsbereich einströmt, der eine Katalysatoranordnung und eine der Katalysatoranordnung zugeordnete Zugabevorrichtung aufweist, bei dem dem Abgas über die Zugabevorrichtung ein Reaktionsmittel zugegeben wird, die Stickoxide über eine katalytische Reaktion an der Katalysatoranordnung weitgehend abgebaut werden und das Abgas aus dem Reaktionsbereich ausströmt, ausgegangen. Dabei wird zunächst
- dem Abgas über eine einem ersten DeNOx-Katalysator der Katalysatoranordnung zugeordneten Zugabevorrichtung das Reaktionsmittel zugegeben, und danach
- wenigstens ein Teil der Stickoxide über eine selektive katalytische Reaktion an dem ersten DeNOx-Katalysator der Katalysatoranordnung abgebaut, und danach
- dem Abgas über eine einem zweiten DeNOx-Katalysator der Katalysatoranordnung zugeordneten Zugabevorrichtung das Reaktionsmittel zugegeben, und danach
- ein weiterer Teil der Stickoxide über eine selektive katalytische Reaktion an dem zweiten DeNOx-Katalysator der Katalysatoranordnung abgebaut.

Diese Weiterbildung des eingangs genannten Katalysatorsystems bzw. des eingangs genannten Verfahrens zum Abbau von Stickoxiden mit Hilfe eines Reaktionsmittels gemäß der Erfindung erweist sich also außer im Normalbetrieb eines Katalysators insbesondere bei hohen Abgastemperaturen, vor allem oberhalb von 450 °C und/oder kleinen Stickoxideingangskonzentrationen, vor allem unterhalb von 200 ppm, als vorteilhaft.

Dadurch ist die Zugabe des Reaktionsmittels räumlich aufgeteilt, günstigerweise gleichmäßig, so dass vorteilhaft eine Zugabe von Reaktionsmittel in einem hohen Überschuss, insbesondere oberhalb eines Faktor 1.3 über der Stöchiometrie, vermieden wird. Dadurch kann auf bisher übliche ergänzende Regelmaßnahmen für den Katalysator und/oder besondere Ausbildungen des Aktivmaterials weitgehend verzichtet werden. Deren Auslegung wird deutlich weniger aufwendig. Dies hat die weiteren Vorteile eines einfachen Aufbaus des verwendeten Katalysatorsystems und einer einfachen und kostengünstigen Herstellung des Katalysatorsystems. Ein weiterer Vorteil ist, daß ein problemloser Betrieb eines Katalysatorsystems gemäß der Erfindung sowohl bei moderaten Betriebszuständen als auch bei Betriebszuständen in Grenzbereichen möglich ist.

Anhand einer Zeichnung werden vorteilhafte Ausführungsbeispiele der Erfindung, insbesondere im Vergleich zum Stand der Technik, näher erläutert. Im Hinblick auf Ergänzungen der aus der Zeichnung unmittelbar erkennbaren Lehren wird auf den einschlägigen Stand der Technik verwiesen. Die Figuren zeigen in schematischer Darstellung:
- FIG 1: ein Katalysatorsystem mit zugeordneter Zugabevorrichtung in einem Abgaskanal gemäß dem Stand der Technik,
- FIG 2: eine vorteilhafte Ausführung eines Katalysatorsystems mit einer zugeordneten Zugabevorrichtung gemäß der Erfindung,
- FIG 3: eine weitere vorteilhafte Ausführung eines Katalysatorsystems gemäß der Erfindung,
- FIG 4: eine Abhängigkeit einer Verbrennung eines Reaktionsmittels (NH₃) von einer Reaktionstemperatur bei einem Katalysatorsystem gemäß dem Stand der Technik,
- FIG 5: eine Abhängigkeit einer Verbrennung eines Reaktionsmittels (NH₃) von der Stickoxideingangskonzentration bei einem Katalysatorsystem gemäß dem Stand der Technik,
- FIG 6: eine Abhängigkeit einer Verbrennung eines Reaktionsmittels (NH₃) von der Reaktionsmittel-/StickoxidStöchiometrie.

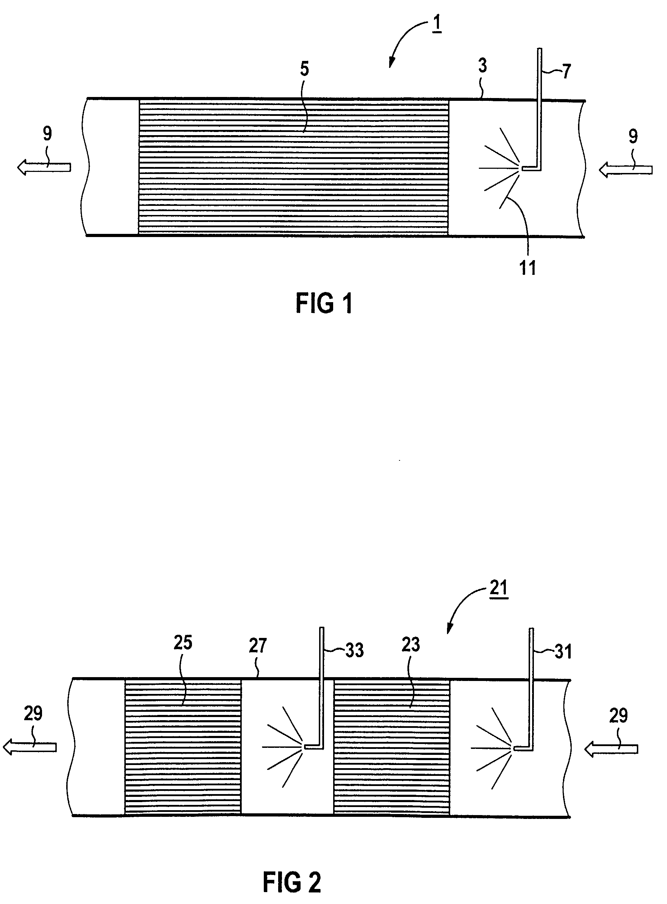

Figur 1 zeigt ein Katalysatorsystem 1 mit einem von einem Abgas, insbesondere einem Gasgemisch in Strömungsrichtung 9 durchströmbaren Reaktionsbereich 3 und mit einer Katalysatoranordnung 5 und einer der Katalysatoranordnung 5 zugeordneten Zugabevorrichtung 7. Das Reaktionsmittel 11 ist in den Reaktionsbereich 3 über die Zugabevorrichtung 7 einbringbar. Bei dem Katalysatorsystem 1 gemäß dem Stand der Technik ist der Katalysatoranordnung lediglich eine Zugabevorrichtung mit einem einzigen Teil 7 zugeordnet, so dass insbesondere bei relativ hohen Abgastemperaturen (> 450 °C) 5 des Abgases und insbesondere kleinen Stickoxideingangskonzentration (< 200 ppm) im Abgas eine Zugabe des Reaktionsmittels 11 in einem hohen Überschuss erfolgen muss, um eine ausreichende Verbrennung der Stickoxide an der Katalysatoranordnung 5 zu ermöglichen. Dabei erfolgt das Eindüsen des Reaktionsmittels 11 in das Katalysatorsystem 1 durch die einteilige Ausgestaltung mit einem einzigen Teil 7 der Zugabevorrichtung entsprechend an einer einzigen Stelle im Reaktionsbereich 3, wobei der Restbereich 3 der Katalysatoranordnung 5 in Strömungsrichtung 9 vorgeordnet ist.

Figur 2 zeigt ein erstes Ausführungsbeispiel eines Katalysatorsystems 21 gemäß der Erfindung. Ein erster Teil 23 einer Katalysatoranordnung und ein zweiter Teil 25 der Katalysatoranordnung sind dabei in einem Reaktionsbereich 27 untergebracht. In Strömungsrichtung 29 des Abgases ist dabei der erste Teil 23 der Katalysatoranordnung vor dem zweiten Teil 25 der Katalysatoranordnung angeordnet. Dem ersten Teil 23 der Katalysatoranordnung ist dabei ein erster Teil 31 einer Zugabevorrichtung zugeordnet, welche in Strömungsrichtung 29 des Abgases vor dem ersten Teil 23 der Katalysatoranordnung angeordnet ist. Des Weiteren ist dem zweiten Teil 25 der Katalysatoranordnung ein zweiter Teil 33 einer Zugabevorrichtung zugeordnet, welche wiederum im Strömungsrichtung 29 des Abgases vor dem zweiten Teil 25 der Katalysatoranordnung angeordnet ist. Bei diesem vorteilhaften Ausführungsbeispiel sind der erste Teil 31 der Zugabevorrichtung, der erste Teil 23 der Katalysatoranordnung, der zweite Teil 33 der Zugabevorrichtung und der zweite Teil 25 der Katalysatoranordnung in Strömungsrichtung 29 des Abgases abwechselnd angeordnet. Dadurch wird eine besonders vorteilhafte Aufteilung der Zugabe des Reaktionsmittels erreicht. Anstatt jeweils einem einzigen Teil 31 und 32 einer Zugabevorrichtung können wahlweise auch jeweils eine Anzahl oder Vielzahl von Teilen einer Zugabevorrichtung jeweils vor dem ersten Teil 23 der Katalysatoranordnung bzw. vor dem zweiten Teil 25 der Katalysatoranordnung vorgesehen sein. Auf diese Weise ist eine räumlich gezielte Zugabe von Reaktionsmittel erreicht, wobei die erforderliche Menge an Reduktionsmittel jeweils unter Vermeidung einer Überdosierung einstellbar ist.

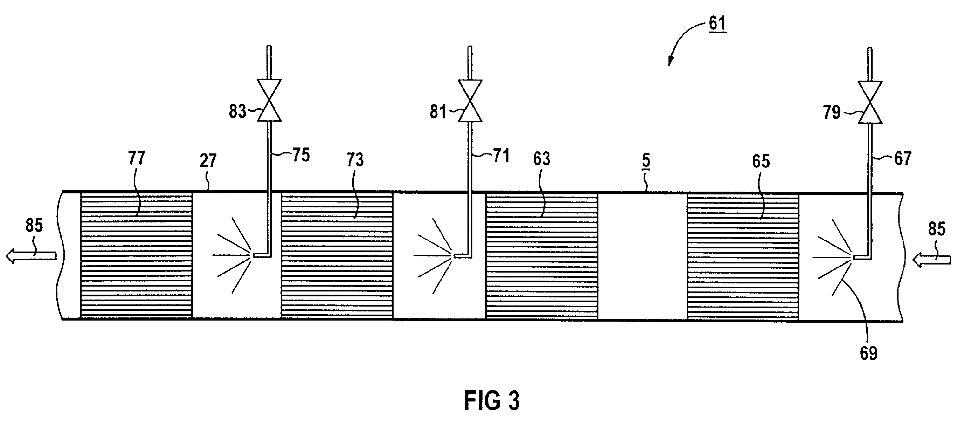

Gegebenenfalls kann es vorteilhaft sein, wie in dem in Figur 3 gezeigten Ausführungsbeispiel eines Katalysatorsystems 61, einem Teil 63 oder mehreren Teilen einer Katalysatoranordnung 5 keinen Teil einer Zugabevorrichtung zuzuordnen. Wahlweise kann dort auch ein solcher Teil einer Zugabevorrichtung zugeordnet werden, welcher mindestens zeitweise eine Zugabe von Reaktionsmittel unterbindet. Ebenso kann einem weiteren Teil 65 der Katalysatoranordnung ein Teil 67 einer Zugabevorrichtung zugeordnet sein, welcher eine Zugabe eines Reaktionsmittels 69 beispielsweise in einem dichteren Bereich und/oder enger begrenzteren Bereich vornimmt, beispielsweise durch eine angemessene Ausbildung einer Düse. Bei diesem Ausführungsbeispiel wird bei einem Teil 71 einer Zugabevorrichtung, welcher einem weiteren Teil 73 einer Katalysatoranordnung zugeordnet ist, eine Dosiermenge des Reaktionsmittels geregelt. Diese Ausgestaltung kann auch für jeden weiteren anderen Teil 75 einer Zugabevorrichtung, welcher einem weiteren Teil 77 einer Katalysatoranordnung zugeordnet ist, vorteilhaft sein.

Dementsprechend sind den Teilen 67, 71 und 75 der Zugabevorrichtung jeweils eine Regeleinheit 79, 81 und 83 zugeordnet. Solche Regeleinheiten 79, 81 und 83 sind vorteilhaft jeweils auch auf einen günstigen Betriebsparametersatz des Katalysatorsystems 61 und/oder des Abgases 85 und/oder einer Verbrennungsanlage, welche an der Produktion des Abgases beteiligt ist, abgestimmt.

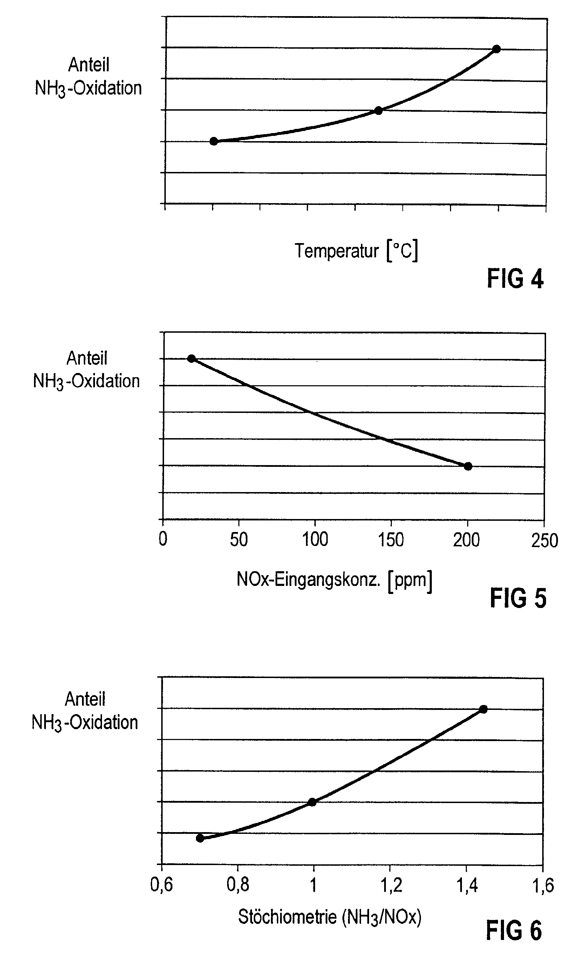

Ein solcher Betriebsparameter kann beispielsweise die Temperatur des Abgases oder die Stickoxideingangs- bzw. - ausgangskonzentration oder der NH₃-Schlupf-Wert im Abgas sein. Eine der Erkenntnis der Erfindung zugrunde liegende Untersuchung, bei der das als Reaktionsmittel verwendete Ammoniak zur Reduktion von Stickoxiden in einem Abgas oxidiert wird, ist in den Figuren 4, 5 und 6 zusammengefasst.

Figur 4 zeigt dabei den Anteil der Ammoniakoxidation (NH₃) in Abhängigkeit von der Temperatur des den Reaktionsbereich eines Katalysatorsystems durchströmenden Abgases. Insbesondere bei Temperaturen des Abgases oberhalb von etwa 450 °C nimmt der Anteil der Ammoniakoxidation überproportional zu.

Ebenso nimmt der Anteil der Ammoniakoxidation gemäß der Figur 5 mit abnehmender Stickoxidkonzentration im Abgas bei erhöhter Temperatur zu, insbesondere bei einer Stickoxidkonzentration unterhalb von etwa 200 ppm.

Mindestens in den durch die Figuren 4, 5 und 6 belegten Bereichen der Ammoniakoxidation wird deshalb bei Katalysatorsystemen und Verfahren zum Abbau von Stickoxiden gemäß dem Stand der Technik mit Reaktions-Schlupf und/oder eine hohe Verbrennung von Ammoniak am Katalysator und/oder einem hohen Ammoniakverbrauch zu beobachten sein. Wie der Verlauf der anteiligen Ammoniakoxidation in Abhängigkeit von der Stöchiometrie von Ammoniak- zur Stickoxidkonzentration in Figur 6 zeigt, ist der Verlauf der Ammoniakoxidation in Abhängigkeit von der Stöchiometrie überproportional, d.h. sobald ein Überangebot an Ammoniak im Verhältnis zur Stickoxidkonzentration vorliegt, verstärkt dies noch die Oxidation des Ammoniaks. Die Folge davon ist, dass dabei sowohl der Verbrauch des oxidierten Reaktionsmittels steigt. Während herkömmliche Verfahren sich im Wesentlichen diesem überproportionalen Verlauf der anteiligen Ammoniakoxidation in Abhängigkeit von der Stöchiometrie beispielsweise durch entsprechende Regelungen der Zugabe des Reaktionsmittels oder einer Auslegung des Aktivmaterials des Katalysatorsystems anpassen, so geht die Erfindung von der Erkenntnis aus, dass eine grundsätzliche Ursache für einen hohen Reaktionsmittelverbrauch bzw. eine ineffektive Nutzung desselben dadurch behoben werden kann, dass das Reaktionsmittel entlang der Strömungsrichtung des Abgases an mindestens zwei räumlich voneinander getrennten Stellen des Katalysatorsystems eingebracht, z.B. über eine entsprechende Anzahl von im Reaktionsbereich angeordneten Düsen eingedüst wird, wobei vor einem ersten Teil der Katalysatoranordnung und von einem zweiten Teil der Katalysatoranordnung Reaktionsmittel separat zugegeben wird. Günstigerweise wird hierbei das Reaktionsmittel gleichmäßig und/oder wenigstens teilweise unterstöchiometrisch in den Reaktionsbereich eines Katalysatorsystems eingebracht.

## Patentansprüche

1. Katalysatorsystem (1,21,41,61) zum Abbau von Stickoxiden in einem Abgas mit Hilfe eines Reaktionsmittels (11,55,57,69), mit einem von dem Abgas durchströmbaren Reaktionsbereich (3,27,53), mit einer Katalysatoranordnung (5) und einer der Katalysatoranordnung(5) zugeordneten Zugabevorrichtung (7), über die Reaktionsmittel (11,55,57,69) in den Reaktionsbereich (3,27,53) einbringbar ist,
**dadurch gekennzeichnet, dass** ein erster Teil (23,45) der Katalysatoranordnung (5) einem ersten Teil (31,43) der Zugabevorrichtung und ein zweiter Teil (25,49) der Katalysatoranordnung (5) einem zweiten Teil (25,49) der Zugabevorrichtung (7) zugeordnet ist, wobei der erste Teil (23,45) und der zweite Teil (25,49) der Katalysatoranordnung (5) gleiche Katalysatoren umfassen.

2. Katalysatorsystem (1,21,41,61) nach Anspruch 1,
**dadurch gekennzeichnet, dass** der erste Teil (24,45) und der zweite Teil (25,49) der Katalysatoranordnung DeNOx-Katalysatoren umfassen.

3. Katalysatorsystem (1,21,41,61) nach Anspruch 1 oder 2,
**dadurch gekennzeichnet, dass** in Strömungsrichtung (9,29,51) des Abgases der erste Teil (23,45) der Katalysatoranordnung (5) vor dem zweiten Teil (25,49) der Katalysatoranordnung angeordnet ist und der erste Teil (31,43) der Zugabevorrichtung (7) vor dem ersten Teil (23,45) der Katalysatoranordnung (5) angeordnet ist.

4. Katalysatorsystem (1,21,41,61) nach Anspruch 1,
**dadurch gekennzeichnet, dass** die Katalysatoren eine katalytische Substanz aus der Gruppe, bestehend aus: Titanoxid (TiO₂), Wolframoxid (WO₃), Molybdänoxid (MoO₃), Vanadiumoxid (V₂O₃), Calziumoxid (CaO), Aluminiumoxid (Al₂O₃), Boroxid (B₂O₃) und Siliziumoxid (SiO₂) aufweisen und/oder Verbindungen davon sind.

5. Katalysatorsystem (1,21,41,61) nach Anspruch 1,
**dadurch gekennzeichnet, dass** das Reaktionsmittel (11,55,57,69) im Wesentlichen zu einem Reduktionsmittel zur Reduktion der Stickoxide, insbesondere zu einer Ammoniakverbindung, umsetzbar ist.

6. Verwendung des Katalysatorsystems (1,21,41,61) nach einem der Ansprüche 1 bis 5 bei einer Verbrennungsanlage, insbesondere einer Gasturbine.

7. Verfahren zum Abbau von Stickoxiden in einem Abgas mit Hilfe eines Reaktionsmittels (11,55,57,69), mit einem Katalysatorsystem(1,21,41,61) mit einem von dem Abgas durchströmbaren Reaktionsbereich (3,27,53) und mit einer Katalysatoranordnung (5) und einer der Katalysatoranordnung (5) zugeordneten Zugabevorrichtung, insbesondere mit einem Katalysatorsystem (1,21,41,61) nach einem der Ansprüche 1 bis 5, wobei
- das Abgas in Strömungsrichtung (9,29,51) in den Reaktionsbereich (3,27,53) einströmt,
- dem Abgas vor einem ersten Teil (23,45) der Katalysatoranordnung (5) Reaktionsmittel (11,55,57,69) zugegeben wird, und
- wenigstens ein Teil der Stickoxide über eine katalytische Reaktion an dem ersten Teil der Katalysatoranordnung abgebaut wird,
- dem Abgas vor einem zweiten Teil (25,49) der Katalysatoranordnung (5) Reaktionsmittel (11,55,57,69) zugegeben wird, und
- ein weiterer Teil der Stickoxide über eine katalytische Reaktion an dem zweiten Teil (25,49) der Katalysatoranordnung abgebaut wird, und
- das Abgas aus dem Reaktionsbereich (3,27,53) ausströmt.

8. Verfahren nach Anspruch 7,
**dadurch gekennzeichnet, dass** entlang der Strömungsrichtung (9,29,51)des Abgases abwechselnd dem Abgas Reaktionsmittel (11,55,57,69) zugegeben und jeweils an einem Teil der Katalysatoranordnung wenigstens ein Teil der Stickoxide abgebaut wird.

9. Verfahren nach Anspruch 7 oder 8,
**dadurch gekennzeichnet, dass** an einem Teil (31,53,43,47) der Zugabevorrichtung (7) eine auf den Zustand des Katalysatorsystems (1,21,41,61) und/oder auf den Zustand des Abgases und/oder auf den Zustand einer dem Abgas zugeordneten Verbrennungsmaschine, abgestimmte Eingabe von Reaktionsmittel (11,55,57,69) erfolgt.

10. Verfahren nach Anspruch 9,
**dadurch gekennzeichnet, dass** der Zustand des Abgases durch Temperatur und/oder Stickoxid-Konzentration und/oder der Reaktionsmittelkonzentration bestimmt ist.

11. Verfahren nach Anspruch 9,
**dadurch gekennzeichnet, dass** die Abstimmung eine Kalkulation der Reaktionsmittelmenge umfasst.

12. Verfahren nach Anspruch 11,
**dadurch gekennzeichnet, dass** an einem Teil (31,33,43,47) der Zugabevorrichtung (7) Reaktionsmittel (11,55,57,59) unterstöchiometrisch zugegeben wird.

13. Verfahren nach Anspruch 7,
**dadurch gekennzeichnet, dass** das Abgas mit einer Temperatur oberhalb von 400 °C einströmt.

14. Verfahren nach Anspruch 7,
**dadurch gekennzeichnet, dass** das Abgas mit einer Stickoxid-Konzentration von unterhalb 200 ppm einströmt.
